# EUROPEAN PATENT APPLICATION

(11) **EP 0 657 651 A1**
(43) Date of publication of application: **14.06.1995**
(21) Application number: 94308619.9
(22) Date of filing: 22.11.1994
(51) Int. Cl.: F04D 9/04, F04D 15/00, F02C 7/236

(54) **Pump**

(30) Priority: 07.12.1993 GB 9325029
(71) Applicant: LUCAS INDUSTRIES PUBLIC LIMITED COMPANY, Solihull, West Midlands B91 3TX (GB)
(72) Inventor: Heath, Ronald Alfred, Warley, West Midlands, B68 8ED (GB); Smith, Trevor Stanley, Sutton Coldfield, West Midlands (GB); Miles, Alan Thomas, Cheltenham, Gloucestershire GL53 9LW (GB); Tonks, David Jeffrey, Birmingham (GB)
(74) Representative: Robinson, John Stuart

(57) **Abstract**

A pump is provided which comprises a first centrifugal pump (4) arranged to act as an inlet stage, a second centrifugal pump (14) and a hybrid pump (28). A flow controller is arranged to select between the second centrifugal pump (14) and the hybrid pump (28) as an output stage. The second centrifugal pump (14) is used as an output stage during normal operation, whereas the hybrid pump is used as an output stage during start-up, priming and low speed running.

## Description

The present invention relates to a pump. Such a pump is suitable for supplying fuel to a gas turbine engine.

According to the present invention, there is provided a pump comprising a first centrifugal pump arranged to act as an inlet stage, a second centrifugal pump, a hybrid pump, and flow control means for selecting between the second centrifugal pump and the hybrid pump as an output stage.

It is thus possible to provide the total engine fuel pumping function in a centrifugal pump-based system while maintaining good start, dry lift, and reprime performance and minimising heat rejection. The second centrifugal pump functions as the main output stage, i.e. it is used as the output stage during normal operating conditions, but the hybrid pump is used as the output stage during a starting and/or priming phase. The hybrid pump may also provide servo actuation pressure for engine actuators at sub-idle engine speeds.

Preferably the first centrifugal pump has an axial impeller.

Preferably the second centrifugal pump has a radial impeller. Preferably the impeller is dished to reduce the overhang moment.

Preferably the hybrid pump is a side channel pump.

The side channel pump may be in series or in parallel with the second certrifugal pump.

Preferably a first valve is provided for controlling liquid flow from an outlet of the inlet stage to an inlet of the side channel pump.

Preferably a second valve is provided for controlling liquid flow from an outlet of the side channel pump. Advantageously the second valve, when at a closed position such that the second centrifugal pump is selected as the output stage, connects the side channel pump to a drain.

Preferably a pressure relief valve is provided to relieve excess pressure at the outlet of the side channel pump. Thus the pressure rise provided by the side channel pump is limited. This minimises waste input power when the side channel pump capability is excessive.

Preferably a non-return valve is provided at the outlet of the second centrifugal pump. Advantageously the non-return valve opens when the pressure at the output of the second centrifugal pump exceeds the pressure at the output of the side channel pump. Advantageously opening of the non-return valve supplies servo pressure to the first and second valves so as to close the first and second valves.

Preferably a reservoir is provided downstream of a side channel pump outlet valve.

The first centrifugal pump and the second centrifugal pump may be cantilever mounted at opposing ends of a common shaft. Additionally the side channel pump may be mounted on the shaft between the first and second centrifugal pumps.

The present invention will further be described, by way of example, with reference to the accompanying drawings, in which:
Figure 1 is a schematic diagram of a fuel system including a pump constituting an embodiment of the present invention;
Figure 2 shows the axial compressor, the radial compressor and the side channel pump of Figure 1 in greater detail;
Figure 3 is an enlarged cross sectional view of the side channel pump in a plane parallel to the axis of the drive shaft;
Figure 4 is a cross sectional view of the side channel pump viewed along the axis of the drive shaft;
Figure 5 is a cross sectional view of a pressure relief valve;
Figure 6 is a cross sectional view of a side channel pump inlet valve;
Figure 7 is a cross sectional view of a side channel pump outlet valve;
Figure 8 is a cross sectional view of a non-return valve; and
Figure 9 is a schematic cross-section of a further arrangement of the pump shown in Figure 1.

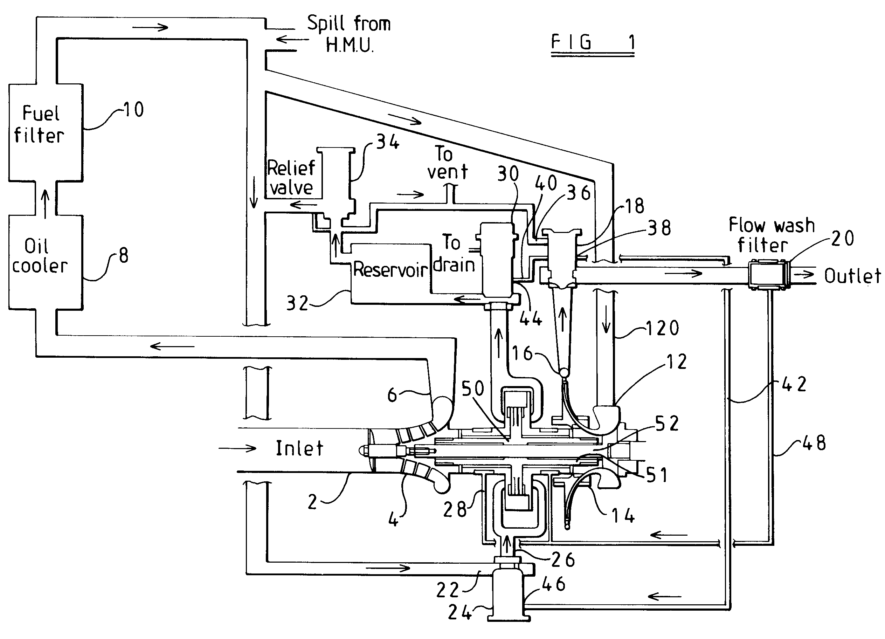

As shown in Figure 1, fuel from a fuel tank (not shown) is admitted to an inlet 2 of an inlet stage or low pressure pump 4. The low pressure pump 4 is a centrifugal pump. An outlet 6 of the low pressure pump 4 is connected to a fuel cooled oil cooler 8 and a fuel filter 10 in series. From the fuel filter 10, the fuel can travel along two paths. The first path supplies fuel to an inlet 12 of an output stage or high pressure pump 14. The high pressure pump 14 is a centrifugal pump. An outlet 16 of the high pressure pump 14 is connected to an inlet of a non-return valve 18. An outlet of the non-return valve 18 is connected to supply fuel, via a flow wash filter 20 and a metering control (not shown), to a gas turbine engine (not shown) and to fuel pressure operated actuators of the engine.

The second path from the fuel filter 10 supplies fuel to an inlet 22 of a side channel pump inlet valve 24. An outlet 26 of the valve 24 is connected to an inlet port of a side channel pump 28. An outlet of the side channel pump 28 is connected to an inlet of a side channel pump outlet valve 30. When the valve 30 is open, fuel at relatively high pressure can flow to a reservoir 32. A pressure relief valve 34 is connected between the reservoir 32 and the inlets of the side channel pump inlet valve 24 and the high pressure pump 14. Fuel from the reservoir 32 is also supplied to a control port 36 of the non-return valve 18 so as to hold the valve 18 closed until the fuel pressure at the outlet of the high pressure pump 14 exceeds the fuel pressure in the reservoir 32 by a predetermined amount dependent upon the preloading supplied by a spring 38 within the valve 18. Movement of the non-return valve 18 to the open position also supplies high pressure fuel, via control lines 40 and 42, to control ports 44 and 46 of the side channel pump outlet valve 30 and the side channel pump inlet valve 24, respectively, so as to urge the valves to their closed positions. A small fuel flow is taken from the flow wash filter 20, via a fuel path 48, and supplied to bearings 50 of a journal shaft 51 which supports and provides the drive for the low pressure pump 4, the high pressure pump 14 and the side channel pump 28.

In use, the low pressure pump 4 provides a suitable low pressure reference pressure for operation of actuators and of a hydromechanical fuel metering unit of the turbine engine. The low pressure pump 4 also ensures that sufficient pressure is supplied to the inlet of the high pressure pump 14, which functions as the main pressure raising stage, during both normal and emergency operating conditions. The high pressure pump 14 provides a second stage of pressure rise to provide sufficient pressure and flow to meet the engine's requirements during all operating conditions. However, as the high pressure pump does not operate effectively at low speeds, i.e. sub-idle speeds, the side channel pump 28 is provided and the valve 18 selects the side channel pump as the output stage at such low speeds.

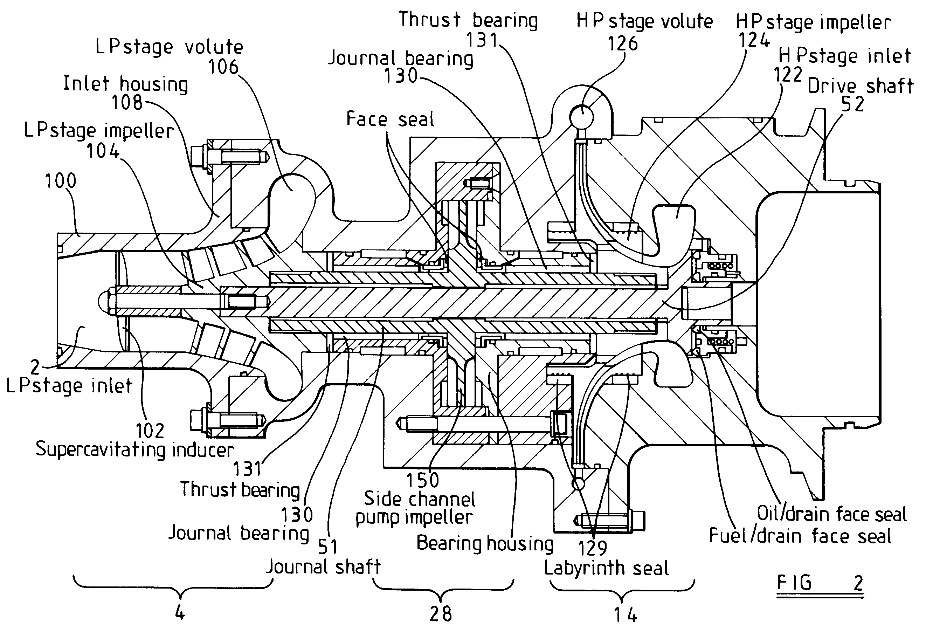

The low pressure, high pressure and side channel pumps are housed within a common casing, as shown in Figure 2. The low pressure pump 4 is an axial type pump and has a short axial inlet pipe 100, a propeller type inducer 102, an impeller 104, a constant velocity volute and a diffuser (not shown). The inducer 102 and impeller 104 are cantilever mounted on a first end of the journal shaft 51 which is driven by the drive shaft 52. The inducer 102 gives a gentle addition of energy to the fuel entering the low pressure pump 4. At critical suction performance conditions, this lifts the pressure of the incoming fuel well above the fuel vapour pressure, thereby causing any gas bubbles in the fuel to collapse in the region between the inducer 102 and the impeller 104.

The volute 106 allows the fuel to be collected before passing from the volute 106 into a diffuser.

The high pressure pump 14 comprises a falling inlet pipe 120 (see Figure 1), a volute type inlet 122, a single stage shrouded radial impeller 124, a volute 126 and a diffuser (not shown). The impeller 124 is provided with front and rear labyrinth seals 129 to inhibit fuel leakage from the impeller. The impeller 124 is cantilever mounted on a second end of the journal shaft 51.

The impeller 124 is slightly dished to reduce the overhung moment created by the high pressure stage radial load. Flow is collected in a constant velocity volute. These features act in conjunction with the low pressure pump 4 to enable journal bearings 130 of the shaft 51 always to operate in a non-tilted manner. Fuel passes from the constant velocity volute 126 to a diffuser. The dimensions of the high pressure pump 14 are chosen so as to ensure adequate fuel pressure and flow rate at the maximum flow required by the engine or engines.

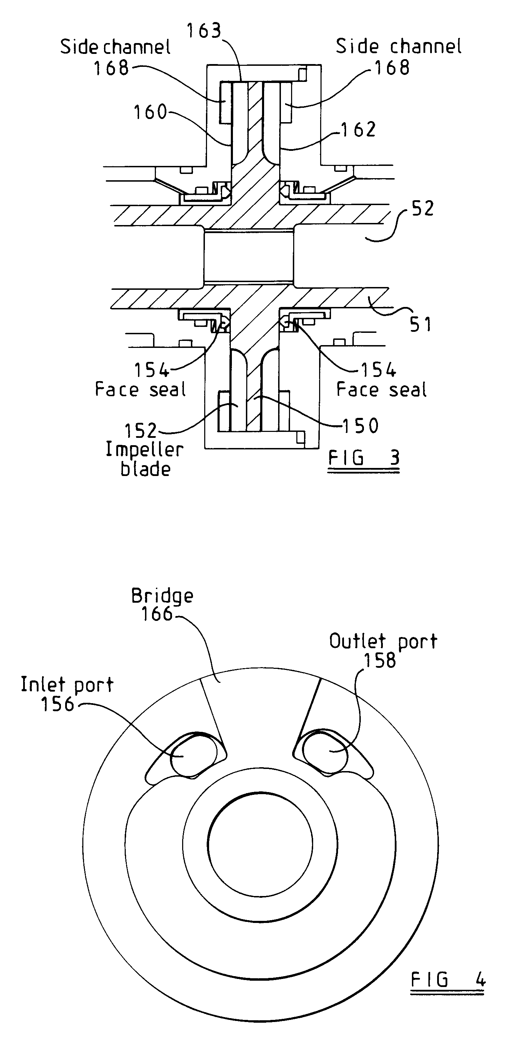

The side channel pump 28 has an impeller 150 comprising a disc shaped rotor having radial blades 152. The impeller 150 is located within a cylindrical cavity formed in a casing of the pump and bounded by plane end faces 160 and 162 and a cylindrical face 163, as shown in Figure 3. Face seals 154 abut either side of the rotor of the impeller 150 and substantially prevent fuel from leaking from the cavity along the journal shaft 51. The face seals are pressure balanced and provide a fluid tight seal when the pump is operating and when the pump is drained. Inlet and outlet ports 156 and 158, respectively, are formed in each end face 160 and 162 of the cavity. The impeller 150 is divided in two by a central plate (perpendicular to the axis of rotation of the impeller). A bridge 166 separates the inlet and outlet ports 156 and 158 in each end face 160 and 162. A leakage path between the inlet and outlet ports 156 and 158 is kept small by having a tight clearance between the impeller and the walls of the cavity.

The side channel pump is symmetrical about the plane of the impeller 150. Thus, only one half of the pump will be described. Moving in the same direction as the rotation of the impeller 150 and starting at the bridge 166, a side channel 168 of rectangular cross section tapers from zero to full width and depth and continues with the same cross section before tapering down to zero before the bridge 166.

As the impeller blades 152 move over the bridge 166 and the side channel begins to enlarge, fuel entrained between the blades moves radially outwards and into the side channel 168, thereby vacating a space into which more fuel is admitted from the inlet port 156.

Circulation of fuel between the blades 152 into the side channel 168 and back again due to the centrifugal pressure distribution allows the impeller 150 to carry the fuel towards the outlet port 158 and to increase the fuel pressure by virtue of the continuing addition of energy to the circulating fuel. As the side channel 168 diminishes, fuel is forced radially inwards and into the outlet port 158. Each blade then crosses the bridge to repeat the cycle.

The side channel pump 28 works effectively on gases and multiphase fluids. In order to achieve this effectiveness on gases, a "liquid ring" within the side channel pump 28 must be maintained and the clearances between the impeller and the bridge must be kept small. There is a possibility that the liquid ring could be lost due to vaporisation during periods of windmilling dry. To overcome this potential problem, the rising side channel pump delivery pipe downstream of the side channel pump outlet valve 30 is arranged to act as a reservoir 32 for fuel. In the event of a fuel run out, some fuel will still exist in the reservoir 32 and a liquid ring will be reformed from the fuel existing in the falling side channel pump inlet pipe. The side channel pump can then attempt to pump air from the fuel system so as to re-prime the fuel system. The air will rise through the fuel maintained in the reservoir 32. If the liquid ring is lost, the pumping action will cease and fuel from the reservoir 32 can drop back through the outlet port 158 to reinstate the liquid ring. Thus the side channel pump can re-prime the fuel system in the event of a temporary interruption to the fuel supply.

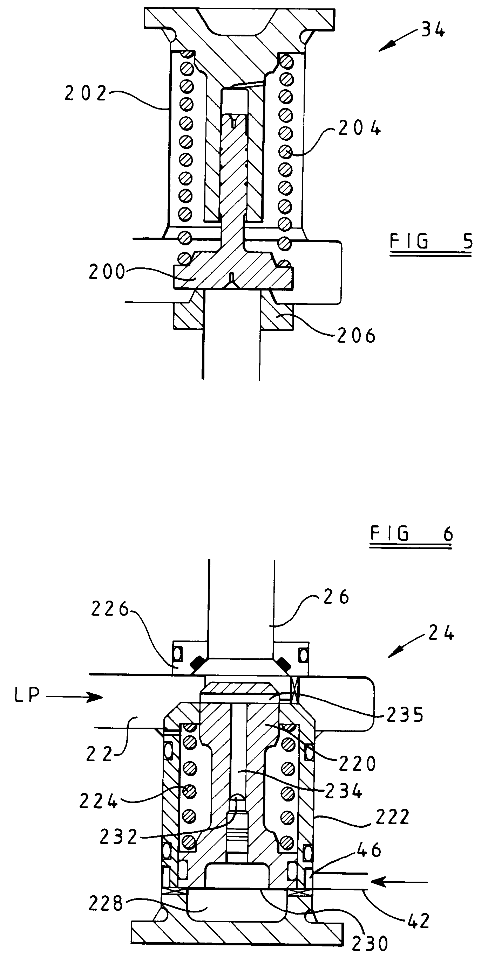

The pressure relief valve 34 comprises a valve member 200 axially slidable within a valve housing 202, as shown in Figure 5. A compression spring 204 urges the valve member 200 into engagement with a valve seat 206, thereby closing the inlet of the valve 34. When the pressure at the inlet exceeds a predetermined pressure, in the case of the present example 230 psi, the valve member is lifted off the valve seat 206, thereby allowing fuel to be vented to low pressure and limiting the pressure at the outlet of the side channel pump 28. The pressure limiting provided by the relief valve 34 effectively limits the amount of power that the side channel pump can consume, and hence the temperature rise experienced by the side channel pump, especially at very low flow rates.

The side channel pump inlet valve 24 comprises a valve member 220 axially movable in substantially fluid sealed engagement within a valve housing 222, as shown in Figure 6. A compression spring 224 urges the valve member 220 away from a valve seat 226, thereby opening a fluid flow path between the valve inlet 22 and the outlet 26. The valve seat 226 is conical and has an elastomeric seal, so as to be drip tight when closed. The side channel pump control port 46 is in fluid communication with a chamber 228 bounded by the valve housing 222 and the valve member 220. Fuel at high pressure, supplied to the chamber 228 via the control line 42, acts on a face 230 of the valve member 220 to move the valve member against the urging of the spring 224 so as to close the side channel pump inlet valve 24. When the relatively high pressure is removed from the control line 42, the spring 224 returns the valve to the open position shown in Figure 6. During start up, pressure in the chamber 228 is vented to low pressure via a Lee jet 232 in the centre of the valve member 220 and passages 234 and 235.

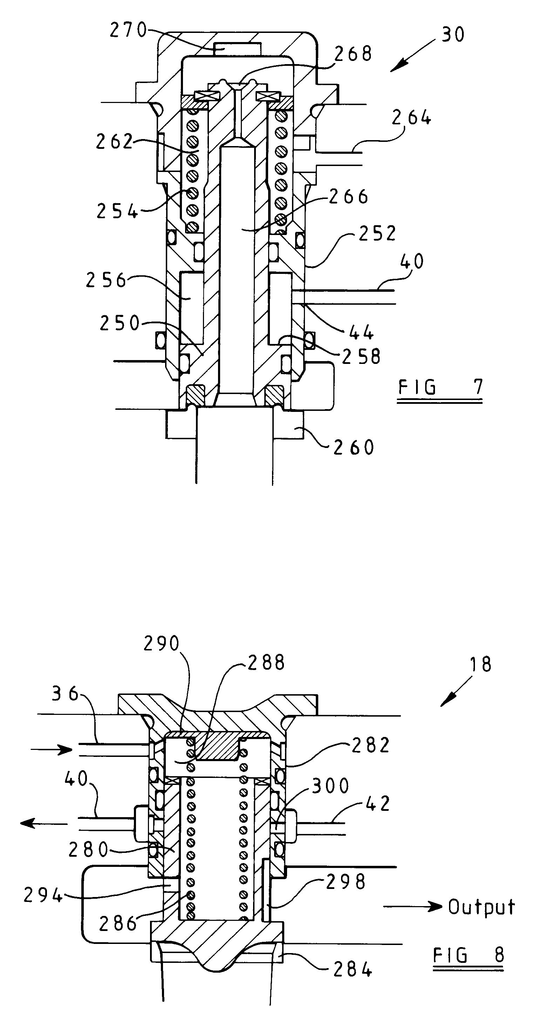

The side channel pump outlet valve 30, shown in Figure 7, has a valve member 250 axially slidable in substantially fluid sealed engagement within a valve housing 252. The valve member 250 is moved to the open position under the action of fuel pressure from the outlet of the side channel pump 28 and the urging of a compression spring 254. A chamber 256, bounded by the valve housing 252 and the valve member 250, is arranged such that pressure within the chamber 256 acts over a surface 258 of the valve member 250 so as to urge the valve member into engagement with a valve seat 260 and thereby to close the valve. A second chamber 254 enclosing the spring 254 is connected to a drain tank (not shown) via a pipe 264. A drilling 266 within the valve member 250 connects the side channel pump outlet to the drain tank when the valve 30 is closed. In the open position, an end 268 of the drilling 266 abuts an elastomeric seal 270 thereby closing the fluid path between the drilling 266 and the drain tank.

During start up, the chamber 256 is vented to low pressure via the control line 40 and control port 44. The valve member 250 moves to the open position under the urging of the spring 254. When the output pressure of the high pressure pump 14 rises to an acceptable value, high pressure fuel is supplied to the chamber 256 via the non-return valve 18, the control line 40 and control port 44. The valve member is then urged to the closed position under the action of the pressure in the chamber 256. The outlet pressure from the side channel pump is simultaneously reduced in response to the closing of the side channel pump inlet valve 24. In the closed position, the remaining fuel in the side channel pump 28 is pumped to the drain tank via the drilling 266. Similarly, vapour within the side channel pump can also escape there from via the drilling 266. When the engine shuts down, the pressure in the chamber 256 falls and the valve member returns to the open position.

The non-return valve 18, shown more clearly in Figure 8, comprises a valve member 280 axially slidable in substantially fluid sealed engagement within a valve housing 282. The valve member 280 is urged into engagement with a valve seat 284, so as to close the valve, by a compression spring 286 and by fuel pressure within a chamber 288 acting on a surface 290 of the valve member 280. The chamber 288 is connected to receive the output of the side channel pump 28. Thus the valve 18 is held closed until the pressure at the output of the high pressure pump 14 exceeds the closing forces provided by the regulated pressure of the side channel pump acting on the surface 290 and the preloading supplied by the spring 286. During "light-up" and starting, the pressure at the outlet of the high pressure pump 14 is insufficient to provide engine flow and the valve 18 is held closed by the spring 286 and the side channel pump outlet pressure in the chamber 288. In this position, fuel at the side channel pump outlet pressure is supplied to the metering unit via holes 294. A groove 298 is provided in the wall of the valve member such that, as the valve member moves to the open position, fluid flow communication is established between the outlet of the valve 18 and the control lines 40 and 42 via a port 300.

During start up, the valve member 280 is held in the closed position by the spring 286 and the pressure in the chamber 288. The fuel escaping from the chamber 288 via the holes 294 is supplied to a hydromechanical fuel metering unit (not shown) and then to the engine. At light up, the pressure rise from the high pressure pump 14 is in the region of 100 psi whereas the output pressure of the side channel pump is in the region of 230 psi.

The output pressure of high pressure pump 14 increases with increasing engine speed until, at about 40% of engine high pressure shaft speed, the pressure from the high pressure pump 14 exceeds that of the side channel pump by about 10.5 psi. This pressure difference causes the non-return valve 18 to start to open. As the valve member 280 moves towards a fully open position, the holes 294 are progressively shut off giving a smooth changeover of supply from the side channel pump 28 to the high pressure pump 14. The movement of the valve member to the open position causes high pressure fuel to be supplied to the control lines 40 and 42 via the groove 298. The high pressure fuel is then supplied via the control lines 40 and 42 to the side channel pump outlet valve 30 and the side channel pump inlet valve 24, respectively, to cause those valves to close.

When the non-return valve 18 is closed, the connection to the control lines 40 and 42 is closed, and these lines are vented to low pressure via the Lee jet 232 in the side channel pump inlet valve 24.

The side channel pump 28 is only operated during the starting cycle, whether this be on the ground or a "windmill" relight.

During engine shutdown, the side channel pump inlet valve 24 is opened under the urging of its spring 224 when the fuel pressure at the outlet of the non-return valve falls to a relatively low value. The side channel pump then fills with fuel. Similarly, the side channel pump output valve 30 opens under the urging of its spring 254, causing the valve member 250 of the output valve 30 to abut the seal 270 so as to close the path from the side channel pump 28 to the drain tank. The non-return valve 18 also closes.

The drive shaft 52 is driven from an engine gearbox (not shown) via an oil mist lubricated spline. The journal shaft 51 is driven from the drive shaft 52 by a fuel lubricated spline. The side channel pump impeller is an integral part of the journal shaft 51. Shims are inserted between the low pressure pump impeller 104, the high pressure pump impeller 124 and the journal shaft 51 so as to accurately set the positions of the impellers. Journal bearings on the journal shaft are supported in carbon sleeves and are fuel lubricated. Thrust bearings 131 are provided at the rear of the impellers 104 and 124 to support the impellers against the axially acting forces produced during operation of the pump.

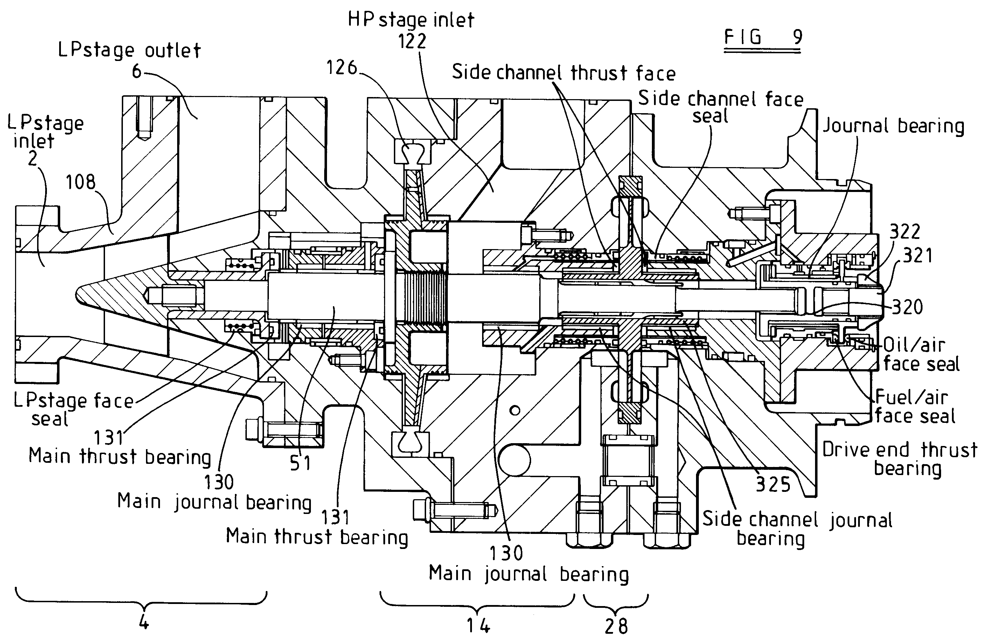

Figure 9 shows an alternative arrangement to that shown in Figure 2 and like reference numbers refer to like parts. The low pressure and high pressure pumps 4 and 14 are adjacent each other on the shaft 51 and arranged such that their respective impellers are back-to-back.

Drive from the engine is provided via an intermediate stub shaft 320. An input shaft 321 connects with the engine via an oil mist lubricated spline 322. The stub shaft 320 is supported by a fuel lubricated carbon journal bearing and thrust bearing arrangement and is connected to the input shaft 321 via oil mist lubricated splines and the main shaft 51 via fuel lubricated splines (not shown). Pressure balanced carbon face seals are provided to prevent leakage of fuel from the pump or gearbox oil into the pump.

The rotor of the side channel pump is supported by two fuel lubricated carbon journal bearings and is axially located between two carbon thrust faces. The rotor is driven from the main shaft 51 via a splined lay shaft 325 that provides articulation between the side channel pump impeller and the main shaft and which allows the side channel pump to be run within tight side clearances. Pressure balanced carbon face seals allow the side channel pump to be fully drained during running of the engine.

It is thus possible to provide a high performance pump having superior self priming capabilities and good start up performance.

## Claims

1. A pump, characterised by a first centrifugal pump (4) arranged to act as an inlet stage, a second centrifugal pump (14), a hybrid pump (28) and flow control means (18) for selecting between the second centrifugal pump (14) and the hybrid pump (28) as an output stage.

2. A pump as claimed in Claim 1, characterised in that the second centrifugal pump (14) functions as the output stage during normal operating conditions and the hybrid pump (28) functions as the output stage during a starting or priming phase.

3. A pump as claimed in Claim 1 or Claim 2, characterised in that the first centrifugal pump (4) has an axial impeller (104)

4. A pump as claimed in any one of the preceding claims, characterised in that the second centrifugal pump (14) has a radial impeller (124).

5. A pump as claimed in any one of the preceding claims, characterised in that the hybrid pump (28) is a side channel pump.

6. A pump as claimed in Claim 5, characterised by a first valve (24) for controlling fluid flow from an outlet (6) of the inlet stage to an inlet of the side channel pump (28).

7. A pump as claimed in Claim 5 or 6, characterised by a second valve (30) for controlling fluid flow from the side channel pump (28) and arranged to connect the outlet of the side channel pump to a drain when the second centrifugal pump (14) is selected as the output stage.

8. A pump as claimed in any one of Claims 5 to 7, further comprising a pressure relief valve (34) for relieving excess pressure at the outlet of the side channel pump (28).

9. A pump as claimed in any one of the preceding claims, characterised in that the flow control means (18) comprises a non-return valve (18) in series with the outlet of the second centrifugal pump (18), the non-return valve being arranged to open when the pressure at the outlet of the second centrifugal pump (14) exceeds the pressure at the outlet of the hybrid pump (28).

10. A pump as claimed in Claim 7 or Claims 8 or 9 when dependent on Claim 7, characterised by a reservoir (32) downstream of the second valve (30) and arranged such that fluid flows from the reservoir (32) to the side channel pump (28) if the pumping action of the side channel pump (28) is lost.
